# EUROPEAN PATENT APPLICATION

(11) **EP 1 455 294 A2**
(43) Date of publication of application: **08.09.2004**
(21) Application number: 04075559.7
(22) Date of filing: 20.02.2004
(51) Int. Cl.: G06F 17/60, H04N 7/16, H04H 1/00

(54) **Personalized and geographical based advertisement for streaming media formats**

(30) Priority: 05.03.2003 US 382014
(71) Applicant: Delphi Technologies, Inc., Troy, MI 48007 (US)
(72) Inventor: Estese, Keenan A., Kokomo Indiana 46902 (US); Welk, Douglas L., Rossville Indiana 46065 (US); Bolduc, Timothy D., Westfield Indiana 46074 (US)
(74) Representative: Denton, Michael John

(57) **Abstract**

A system and method for providing customized content to an end user, performs the steps of determining a location of an end user, determining an identity of an end user and providing content to the end user, which is based on the location and identity of the end user.

## Description

### Technical Field

The present invention is generally directed to a system for providing customized content to an end user and, more specifically, to a system for providing customized advertisements to the end user.

### Background of the Invention

Advertisements have historically been associated with mass media, such as television and radio, and the revenue generated from advertisements has been utilized by broadcasters (content providers) to offset the cost of providing non-advertising content (e.g., music, television shows and sporting events) to a viewer/listener, i.e., an end user. In general, advertisements are utilized to capture the attention of the end user and motivate the end user to some action, which, in theory, benefits the end user, the advertiser and the content provider. Typically, advertisements are most effective when they are matched to the needs and the interests of the end user. Thus, regional and local broadcasts have generally included advertisements that are calculated to generate the interest of a regional and/or local end user. As such, national broadcasts, such as radio and television, have generally given a local station the ability to introduce selected regional/local advertisements in various dedicated time slots. For media, such as the Internet, satellite and cable broadcasts, subscription based services have been widely utilized due to the fact that advertisements have not been easily tailored to fit the needs of any given region or locality which has reduced the effectiveness and attractiveness of these media to advertisers.

What is needed is a system and method that allows personalized and/or geographical based advertisement to be provided to an end user in a variety of media (including the Internet, satellite and cable broadcasts), thus, generally benefiting an end user, advertiser and content provider to a greater extent.

### Summary of the Invention

An embodiment of the present invention is directed to a system and method for providing customized content to an end user. A system, constructed according to the present invention, includes a client computer system that has a memory subsystem for storing data, a transceiver, a geographical location subsystem (a geo-location subsystem) and a client processor. The client processor is coupled to the memory subsystem, the transceiver and the geo-location subsystem. The client processor executes client code, which causes the client processor to perform the steps of determining a location of an end user, as provided by the geo-location subsystem, and providing content to the end user that is based on the location of the end user.

According to another embodiment of the present invention, a server computer system includes a server processor that executes server code, which causes the server computer system to determine an identity of an end user from a transmitted signal received from the client computer system and provide content that is also based on the identity of the end user.

These and other features, advantages and objects of the present invention will be further understood and appreciated by those skilled in the art by reference to the following specification, claims and appended drawings.

### Brief Description of the Drawings

Fig. 1 is an electrical block diagram of an exemplary client computer system in communication with an exemplary server computer system, via a wireless connection;
Fig. 2A is an exemplary flow chart of a routine, which executes on a client computer system and provides an end user location and/or end user identity to a server computer system;
Fig. 2B is an exemplary flow chart of a routine, which may execute on a server computer system to provide advertising content based on an end user location and/or end user identity;
Figs. 3A-3B are exemplary diagrams of customized advertising content delivered to a User A and a User B, respectively; and
Figs. 4A-4B are diagrams of customized advertising content delivered to a User A and a User C, respectively.

### Description of the Preferred Embodiments

The location of an end user can be determined by various positioning systems, such as a global positioning system (GPS) or a geographical-based triangulation system, which a broadly referred to herein as a geo-location subsystem. Providing a user profile is available, advertising can be delivered to an end user that is both personalized for the end user and personalized for a current location of the end user. Since a channel of media content may be segmented at various points in time to include tagged windows, which are of a predetermined length of time, customized advertisements may advantageously be provided to the end user during the windows. In a typical case, an algorithm is used to select an appropriate advertisement to be provided during the programming break.

The algorithm for selecting an advertisement may be implemented as a set of filters, which determine a location of an end user, relative to services in an area and determine a profile and/or preferences of the end user. In the event that an end user does not have a preference or profile, a default message or advertisement may be provided in a given window. It should be appreciated that the customized content can be based solely on a profile and/or preferences of the end user or solely on a location of the end user. It should also be appreciated that a heading of a motor vehicle may also be utilized in conjunction with the location of the motor vehicle to determine what advertisement is provided to the end user. When a user profile/preference is implemented, such a profile/preference can be used in combination with the vehicle location to provide customized content to the end user.

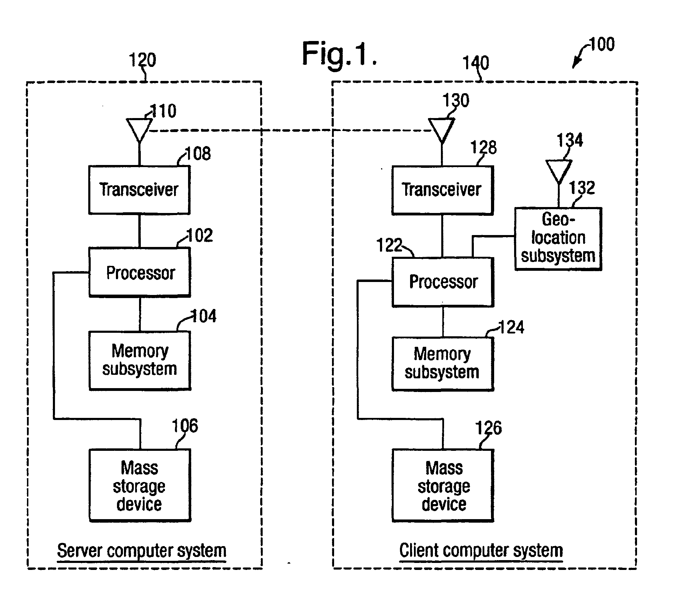

Fig. 1 depicts an exemplary system 100 that includes a client computer system 140 that is in communication with a server computer system 120. As is shown in Fig. 1, the client computer system 140 includes a processor 122 that is coupled to a memory subsystem 124, a transceiver 128 and a geo-location subsystem 132, which receives signals through an antenna 134. As is mentioned above, various positioning systems may be utilized to provide a location of the end user. The processor 122 is also coupled to a mass storage device 126 that may take various forms, such as a hard disk drive, and may be utilized to store advertisements locally, i.e., within the client computer system 140. The transceiver 128 has an associated antenna 130, which is utilized to communicate with the server computer system 120.

The server computer system 120 includes a processor 102, which is coupled to a memory subsystem 104, a transceiver 108 and a mass storage device 106. The processor 102 communicates with the client computer system 140, via a transceiver 108 and its associated antenna 110. In this manner, the server computer system 120 can stream advertising content directly to the client computer system 140, as desired.

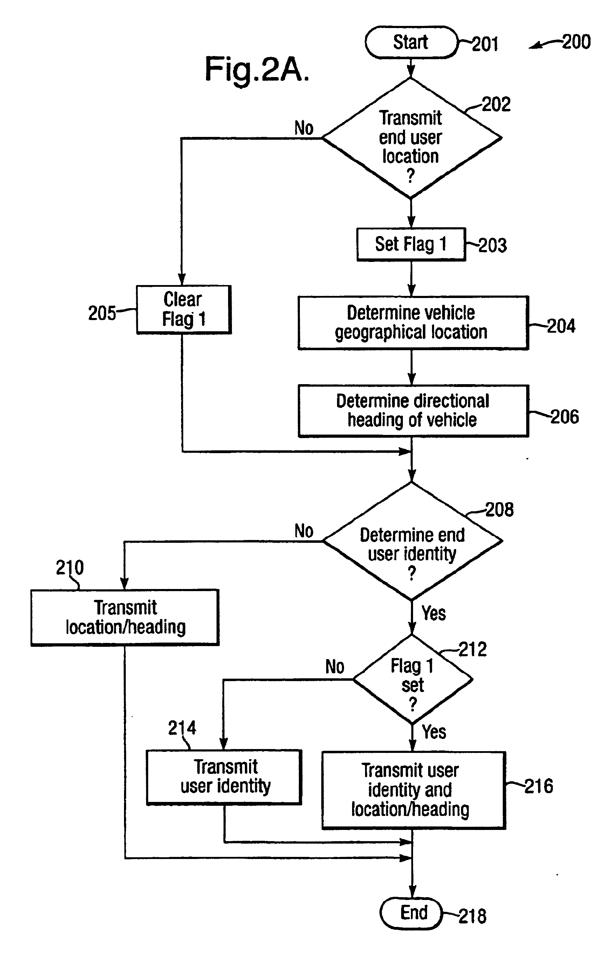

An exemplary client side advertisement selection routine 200 is depicted in Fig. 2A. The routine 200 is executed on the client computer system 140 and is initiated in step 201, at which point control transfers to decision step 202. In step 202, the processor 122 (executing routine 200) determines whether a location of the end user is to be utilized in advertisement selection. If so, control transfers from step 202 to step 203, where a flag (flag1) is set to indicate that the location of the end user is to be transmitted. Next, control transfers to step 204, where the processor 122 determines a vehicle geographical location, as provided by the geo-location subsystem 132. Next, control transfers to step 206, where the directional heading of a vehicle, occupied by the end user, is determined, e.g., from multiple readings provided by the geo-location subsystem 132 or an electronic compass. It should be appreciated that step 206 may be omitted, if desired. Then, control transfers from step 206 to decision step 208. In step 202, when the location of the end user is not to be utilized in advertisement selection, control transfers from step 202 to step 205, where flag1 is cleared, and then to step 208.

In step 208, the processor 122 determines whether an identity of the end user is to be established. If the identity of the end user will not be utilized for advertising content selection, control transfers from step 208 to step 210, where the location and heading or the location, by itself, is transmitted from the client computer system 140 to the server computer system 120. Following step 210, control transfers to step 218 where the routine 200 terminates. In step 208, when it is determined that the identity of the end user will be utilized in selecting advertising content, control transfers to step 212, where the processor 122 determines whether flag1 is set. If flag1 is set, control transfers to step 216, where the client computer system 140 transmits the user identity and the location or the location and the heading of the end user to the server computer system 120. Next, control transfers to step 218. In step 212, when flag1 is not set (flag1 is clear), control transfers to step 214, where the client computer system 140 transmits the identity of the end user before passing control to step 218, where the routine 200 terminates.

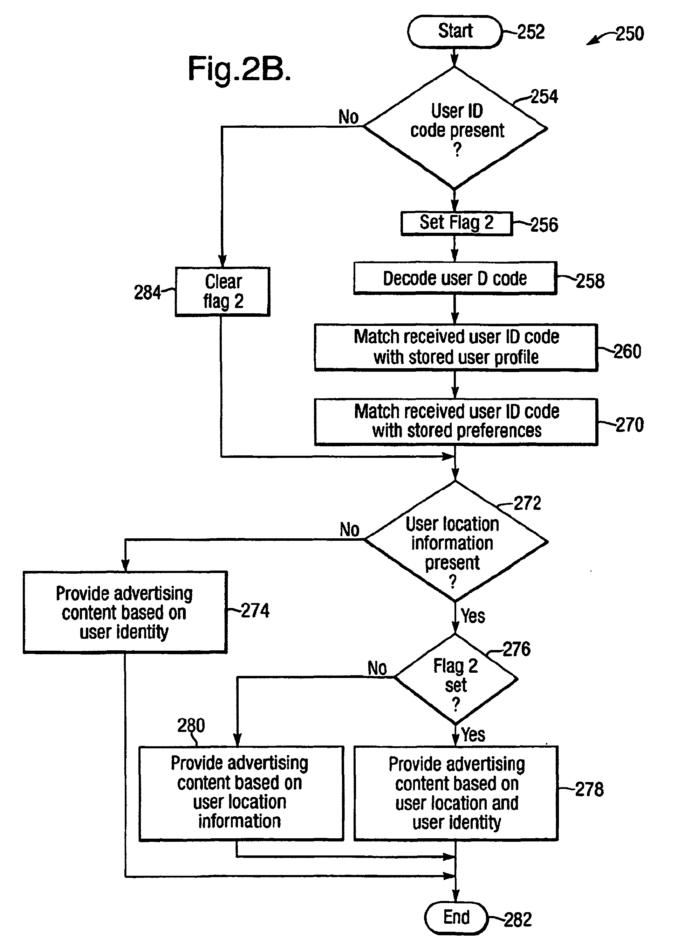

An exemplary server side advertisement selection routine 250 is depicted in Fig. 2B. In step 252, the routine 250 is initiated, at which point control transfers to decision step 254, where the processor 102 determines whether a user ID code is included within a received signal. If a user ID code is not included within the received signal, control transfers from step 254 to step 284, where a flag (flag2) is cleared, at which point control transfers to decision step 272. If a user ID code is present in step 254, control transfers to step 256 where flag2 is set. Next, in step 258, the processor 102 decodes the user ID code. Then, in step 260, the processor 102 determines whether the received user ID code matches a stored user profile. Next, in step 270, the processor 102 determines whether the received user ID code matches one of the stored user preferences. It should be appreciated that if the received ID code does not match a stored user profile and/or stored user preferences, then a default user profile and/or default user preferences, as appropriate, is utilized. Then, control transfers to decision step 272, where the processor 102 determines whether user location information is present in the received signal. If user location information is not present in the received signal, control transfers from step 272 to step 274, where the server computer system 120 provides appropriate advertising content to the end user, based on the identity of the user, by either transmitting the advertising content directly to the client computer system 140 or sending a message to the client computer system 140, which causes the processor 122 to select appropriate advertising content from the mass storage device 126. The routine 250 then terminates in step 282.

If user location information is present in the received signal, control transfers from step 272 to step 276, where the processor 102 determines whether flag2 is set. If flag2 is set, control transfers to step 278, where the server computer system 120 provides appropriate advertising content to the end user, based on the location and identity of the user, by either transmitting the advertising content directly to the client computer system 140 or sending a message to the client computer system 140, which causes the processor 122 to select appropriate advertising content from the mass storage device 126. If flag2 is not set (i.e., flag2 is clear), control transfers to step 280, where the server computer system 120 provides appropriate advertising content to the end user, based on the location of the user, by either transmitting the advertising content directly to the client computer system 140 or sending a message to the client computer system 140, which causes the processor 122 to select appropriate advertising content from the mass storage device 126. From both steps 278 and 280, control transfers to step 282, where the routine 250 terminates.

Accordingly, as described herein, it should be appreciated that a location and/or an identity of an end user can be utilized to provide appropriate advertising content to an end user.

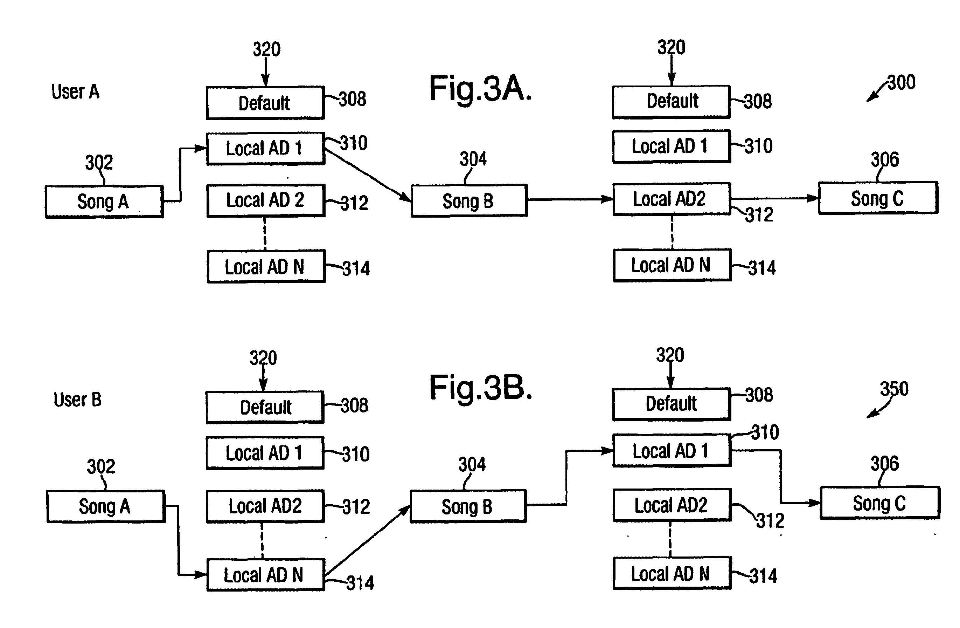

With reference to Figs. 3A and 3B, diagrams depicting advertising content delivery for a User A and a User B, respectively, are shown. As is shown in Figs. 3A and 3B, the User A and the User B are initially listening to the same programmed content, i.e., 'Song A' 302, at a point in time. At a predetermined point in the program stream, a tagged window is flagged and an advertisement personalized to the User A and the User B is then provided during the window. As is shown, following 'Song A' 302, advertising content 310 is provided to User A and advertising content 314 is provided to User B. Next, after the completion of the window, 'Song B' 304 is provided to both User A and User B. In a next tagged window that follows 'Song B,' advertising content 312 is provided to User A and advertising content 310 is provided to user B. Thus, User A and User B receive tailored advertisements, which may come from an advertisement pool 320 that may be utilized for all end users. Further, while the User A and User B receive the same programmed content, i.e., Song A, Song B and Song C, User A and User B receive different advertising content during the tagged windows. As is discussed above, the advertising content may be based on a location of an end user and/or preferences and a profile of the end user.

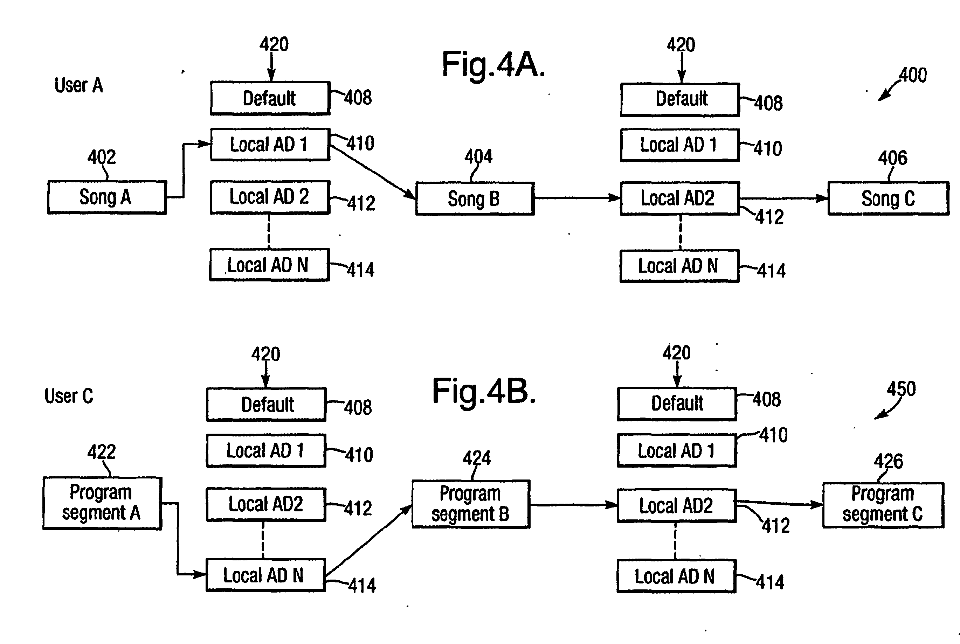

With respect to Figs. 4A and 4B, a User A and a User C, while listening to different channels, still receive advertising content from the same pool of advertising content. With reference to Fig. 4A, User A receives 'Song A', followed by advertising content 410, followed by 'Song B,' followed by advertising content 412, followed by 'Song C.' As is shown in Fig. 4B, the User C receives a 'Programmed Segment A,' e.g., a portion of a talk radio show, followed by advertising content 414, followed by 'Program Segment B,' e.g., another portion of the talk radio show, followed by advertising content 412, followed by 'Program Segment C,' e.g., a third segment of the same radio talk show. Similar to User A and User B of Figs. 3A-3B, User A and User B of Figs. 4A and 4B, respectively, receive tailored advertisements, which may come from an advertisement pool 420 that is also utilized for all end users.

As is mentioned above, advertisement insertion may be achieved by client side insertion or server side insertion. With client side insertion, the client periodically and, on change, provides the server with information, e.g., a location of an end user. The server then sends the client a pointer to a memory location that includes an advertisement that is to be played. Smart clients can maintain an advertising pool, which is used to further refine the selection criteria, whereas a simple client may merely use the last pointer as the next advertisement to stream. During a tagged window, the client asserts the selected advertisement into the tagged window and when that time period is over, the tagged window is closed and the client resumes the program in progress.

Given a unit program model, such as audio on demand, server side insertion can be achieved. In the case of server side insertion, the server queries the client for information, inserts the personalized content directly into the stream on the server side and re-directs the client to the advertising stream for the duration of the tagged window. In this manner, the client experiences a seamless stream of information. Edge caching may be employed to provide better utilization of a fixed network when a server side insertion is utilized. A localized advertising pool can be maintained for fixed access points. In this manner, geographical location may be inferred, when a mobile node accesses data through a fixed access point. The access point serves an appropriate local advertisement, thus, reducing the amount of data flowing across the fixed network.

Accordingly, a system and method have been disclosed herein that provide customized advertising content to an end user. Portions of such a system may advantageously be implemented within a mobile environment, e.g., within an automobile. In this manner, the content may be provided to the end user based on an identity and/or location of the end user. Thus, advertisements can be readily customized for a region and/or a specific end user, thus, making the advertisement more effective and more attractive to advertisers.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the Doctrine of Equivalents.

## Claims

1. A method for providing customized content to an end user, comprising the steps of:
determining an identity of an end user (258);
determining a location of an end user (272); and
providing content to the end user, wherein the content is based on the identity and location of the end user (278).

2. The method of claim 1, wherein the step of determining the location of the end user (258) includes the steps of:
determining a geographical location of the end user (204); and
determining a directional heading of the end user (206).

3. The method of claim 1, wherein the step of determining the identity of the end user (258) includes the steps of:
receiving an identification (ID) code from a transmitted signal (254), wherein the ID code corresponds to a single end user;
matching the received ID code with a stored user profile associated with the single end user (260); and
matching the received ID code with a stored preferences associated with the single end user (270).

4. The method of claim 1, wherein the content is an advertisement.

5. The method of claim 4, wherein the advertisement is provided by a client computer system (140) associated with the end user.

6. The method of claim 4, wherein the advertisement is provided by a server computer system (12) that is in communication with a client computer system (140) associated with the end user.

7. A method for providing customized content to an end user, comprising the steps of:
determining a location of an end user (272); and
providing content to the end user, wherein the content is based on the location of the end user (280).
